# EUROPEAN PATENT APPLICATION

(11) **EP 2 456 198 A1**
(43) Date of publication of application: **23.05.2012**
(21) Application number: 11189962.1
(22) Date of filing: 21.11.2011
(51) Int. Cl.: H04N 5/64

(54) **Display device comprising an infrared sensor**

(30) Priority: 23.11.2010 KR 20100116709; 15.02.2011 KR 20110013056
(71) Applicant: Samsung Electronics Co., Ltd., Suwon-si, Gyeonggi-do 442-742 (KR)
(72) Inventor: Choi, Hoon, Yongin-si (KR); Kim, Kwang Youn, Suwon-si (KR); Jeong, Jae Hyun, Anyang-si (KR); Lee, Yun Young, Suwon-si (KR)
(74) Representative: Waddington, Richard

(57) **Abstract**

A display device having an infrared receiver module. The display device includes a display part on which an image is displayed, a bezel part formed along an outer edge of the display part, an infrared receiving part provided on the bezel part, and the infrared receiver module disposed at a rear surface of the infrared receiving part and including an infrared sensor to receive an infrared signal and a plate-shaped printed circuit board on which the infrared sensor is mounted, and a distance from the outer edge of a side surface of the display part to a most distant portion of the infrared receiver module mounted on the printed circuit board in the sideward direction is shorter than a length from the outer edge of the side surface of the display part to a most distant portion of the printed circuit board.

## Description

### 1. Field

Apparatuses consistent with exemplary embodiments relate to a display device having an infrared receiver module.

### 2. Description of the Related Art

In general, display devices, such as TVs or monitors, display images. Display devices are divided into various types according to methods of displaying image data, signals of which have been processed, on screens. Recently, liquid crystal displays and plasma display panels are often used.

A display device includes a display part on which an image is displayed as seen by a user from a front surface of the display device, and a bezel part provided along an outer edge of the display part and serving as a frame to support the display part. Recently, more attention has been given to the external designs of display devices as well as functions of the display devices. Accordingly, recent developments in the area of display devices are drawn to reducing the width of the bezel parts of the display devices.

However, an infrared receiver module to receive an infrared signal transmitted from a remote controller is disposed at the inside of the bezel part. Therefore, a space occupied by the infrared receiver module becomes an obstacle in the process of reducing the width of the bezel part.

### SUMMARY

One or more exemplary embodiments provide a display device having an infrared receiver module.

Additional aspects of the exemplary embodiments will be set forth in part in the description which follows and, in part, will be obvious from the description, or may be learned by practice of the inventive concept.

According to the present invention there is provided an apparatus and method as set forth in the appended claims. Other features of the invention will be apparent from the dependent claims, and the description which follows.

In accordance with one aspect of an exemplary embodiment, there is provided a display device which includes a display part on which an image is displayed, a bezel part formed along an outer edge of the display part, an infrared receiving part provided on the bezel part, and an infrared receiver module disposed at the rear of the infrared receiving part and including an infrared sensor to receive an infrared signal and a plate-shaped printed circuit board on which the infrared sensor is mounted, wherein a distance from the outer edge of a side surface of the display part to a most distant portion of the infrared receiver module in a sideward direction is shorter than a length of the printed circuit board.

The display device may further include a display module configured such that the display part is formed on a front surface of the display module, the printed circuit board may be separated backwards from the display module such that a mount surface of the printed circuit board on which the infrared sensor is mounted faces the rear surface of the display module and at least a part of the mount surface protrudes to the outside of the edge of the side surface of the display module, and the infrared sensor may be mounted on the protruding part of the mount surface.

The display device may further include a side case configured such that the bezel part is formed on the front surface of the side case, and the side case may be provided with a mount groove in which the infrared receiver module is mounted.

The side case may include a rear surface part disposed at the rear of the display module, and the infrared receiver module may be fixed to the rear surface part.

The side case may be formed of a material transmitting the infrared signal.

A front surface part of the mount groove may be formed in a curved shape so that the infrared signal having various paths may be received by the infrared receiver module. The infrared receiver module may further include a housing in which the printed circuit board is installed.

The housing may include a front surface part disposed in front of the infrared sensor, and the front surface part may be formed of a material transmitting the infrared signal. The housing may include a rear surface part disposed at the rear of the printed circuit board, the rear surface part may include connection protrusions protruding forwards, and the printed circuit board may include connection holes to which the connection protrusions are connected.

The display device may further include a display module configured such that the display part is formed on the front surface of the display module, and the printed circuit board may be disposed such that a mount surface of the printed circuit board on which the infrared sensor is mounted is separated outwards from the edge of the side surface of the display module and extends in the forward and backward direction of the display module.

The display device may further include a front case forming the bezel part, the front case may include a front surface part on which the infrared receiving part is provided, a side surface part formed by bending the front surface part backwards, and a support part separated from the side surface part in the inward direction of the front case and adjacent to one side surface of the display module, and the infrared receiver module may be disposed between the side surface part and the support part.

The infrared receiver module may further include a housing in which the printed circuit board is installed.

The front case may include a receiving hole formed on the infrared receiving part, the housing may include a receiving part protruding in a shape corresponding to the receiving hole so as to be connected to the receiving hole, and the receiving part may be formed of a material transmitting the infrared signal.

The front case may include a connection hole to which the housing is connected, and the housing may include a connection pin connected to the connection hole.

The housing may include a connection groove to which the printed circuit board is connected and a connection pin protruding to the inside of the connection groove, and the printed circuit board may include a connection hole connected to the connection pin when the printed circuit board is mounted in the connection groove.

In accordance with another aspect of an exemplary embodiment, a display device includes a display module configured such that a display part on which an image is displayed is formed on the front surface of the display module, and an infrared receiver module disposed at the rear of the display module to receive an external infrared signal, wherein the infrared receiver module includes an infrared sensor to receive the infrared signal and a printed circuit board on which the infrared sensor is mounted, the printed circuit board is disposed such that a mount surface of the printed circuit board on which the infrared sensor is mounted is separated from the rear surface of the display module in the forward and backward direction and at least a part of the mount surface of the printed circuit board protrudes to the outside in the circumferential direction of the display module, and the infrared sensor is mounted on the protruding part of the mount surface so as to face the front surface of the display part.

In accordance with a further aspect of an exemplary embodiment, a display device includes a display module to form an image, and an infrared receiver module disposed at the outside of the edge of the side surface of the display module in the sideward direction to receive an external infrared signal, wherein the infrared receiver module includes an infrared sensor to receive the infrared signal and a printed circuit board on which the infrared sensor is mounted, and the printed circuit board is disposed such that a mount surface of the printed circuit board on which the infrared sensor is mounted is separated from the edge of the side surface of the display module in the sideward direction of the display module and extends in the forward and backward direction of the display module.

### BRIEF DESCRIPTION OF THE DRAWINGS

These and/or other aspects of the exemplary embodiments will become apparent and more readily appreciated from the following description of the embodiments, taken in conjunction with the accompanying drawings of which:
FIG. 1 is a perspective view illustrating a display device in accordance with one embodiment;
FIG. 2 is an exploded perspective view illustrating main components of the display device in accordance with an embodiment;
FIG. 3 is an enlarged view of an infrared receiver module mounted on the display device in accordance with an embodiment;
FIG. 4 is an exploded perspective view of the infrared receiver module in accordance with an embodiment;
FIG. 5 is a cross-sectional view of the display device having the infrared receiver module mounted thereon in accordance with an embodiment;
FIG. 6 is an exploded perspective view illustrating main components of a display device in accordance with another embodiment;
FIG. 7 is an exploded perspective view of an infrared receiver module in accordance with an embodiment;
FIG. 8 is a cross-sectional view of the display device having the infrared receiver module mounted thereon in accordance with an embodiment;
FIG. 9 is a view illustrating a display device in accordance with a further embodiment; and
FIG. 10 is an exploded perspective view of a display module in accordance with an embodiment.

### DETAILED DESCRIPTION

Reference will now be made in detail to exemplary embodiments, examples of which are illustrated in the accompanying drawings, wherein like reference numerals refer to like elements throughout.

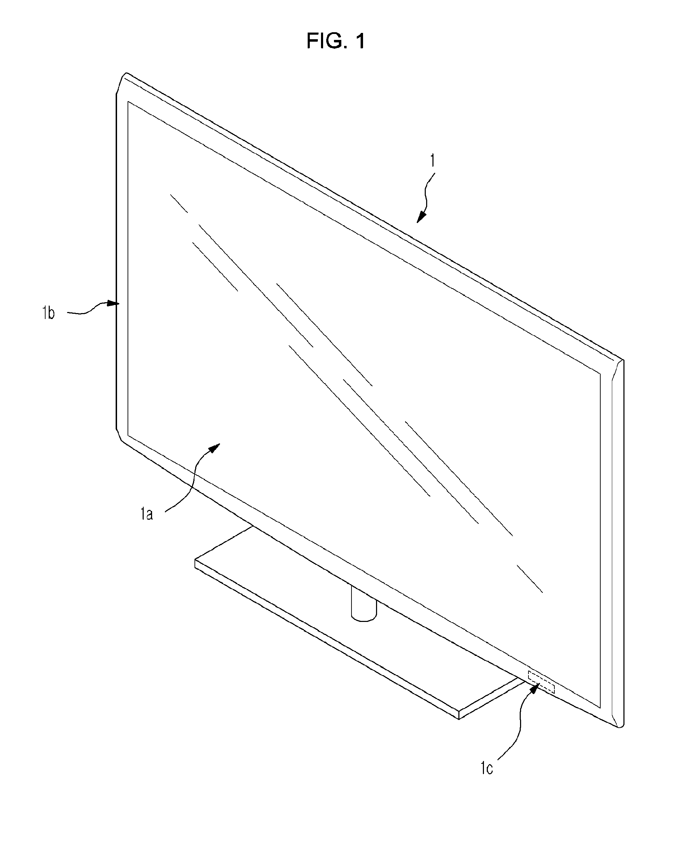

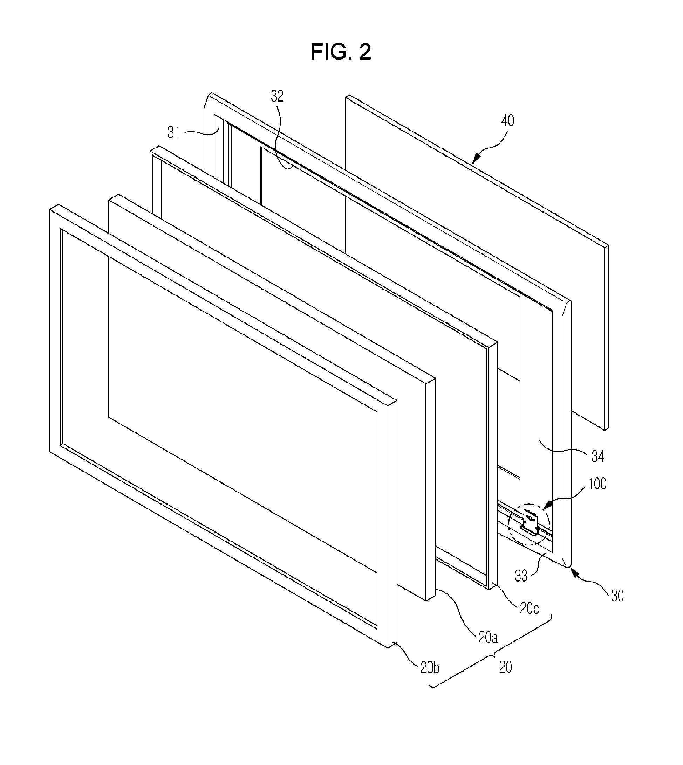

FIG. 1 is a perspective view illustrating a display device in accordance with one embodiment and FIG. 2 is an exploded perspective view illustrating main components of the display device in accordance with the embodiment.

As shown in FIGS. 1 and 2, a display device 1 includes a display part 1a on which an image is displayed, and a bezel part 1b disposed along an outer edge of the display part 1b. Further, an infrared receiving part 1c to receive an infrared signal generated from a remote controller is provided on a portion of the bezel part 1b.

The display part 1a is provided on a surface of a display module 20 which forms an image. The display module 20 may be one of various types of modules including flat display modules, such as a liquid crystal display (LCD), a plasma display panel (PDP) and an organic electroluminescent (EL) display.

The display module 20 includes a display unit 20a which forms an image and includes a front surface facing a user and a rear surface opposite to the front surface. The display module 20 further includes a top chassis 20b and a bottom chassis 20c respectively disposed on the front and rear surfaces of the display unit 20a. In the case of the LCD type display module 20, the display unit 20a is formed by stacking light sources to generate light, a light guide plate to guide the light generated from the light sources in an outside direction of the display unit 20a, optical sheets including a liquid crystal layer and a glass formed of a transparent material so as to transmit the generated light reflected from the bottom chassis 20c.

The bezel part 1b is disposed along an outer edge of the display part 1a and serves to support the display part 1a. The bezel part 1b is formed on a front surface of a side case 30 forming side surfaces of the display device 1.

The side case 30 includes a mount part 31 on which the display module 20 is mounted, a side surface part 33 to form the bezel part 1b, and a rear surface part 34 disposed on a rear surface of the display device 1. A rear case connection hole 32 to which a rear case 40 forming the rear surface of the display device 1 is connected is formed through the rear surface part 34.

The display device 1 is provided so as to be operable by the remote controller. The remote controller transmits an infrared signal to operate the display device 1. The infrared signal passes through the infrared receiving part 1c and controls the display device 1.

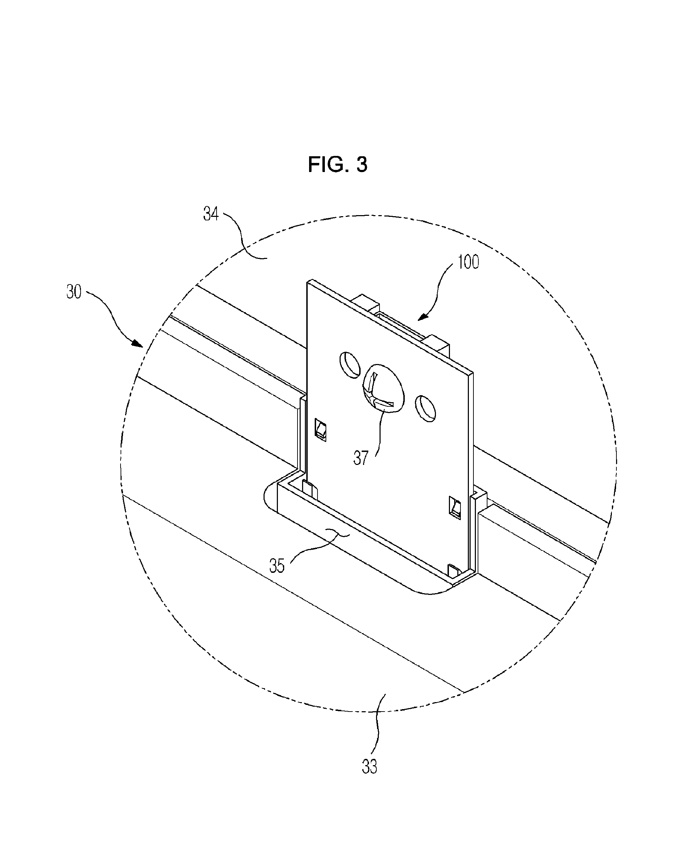

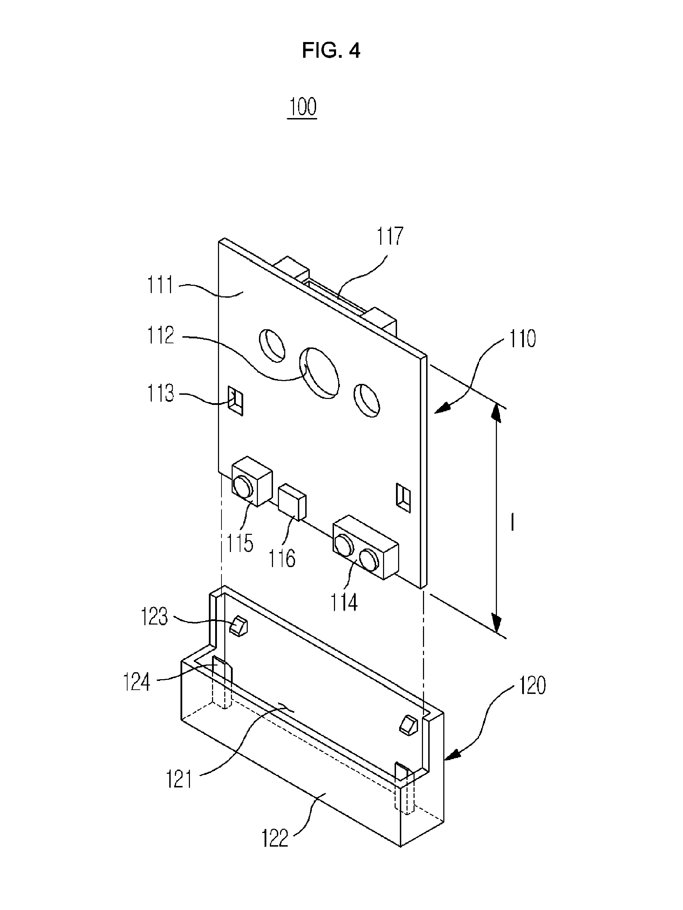

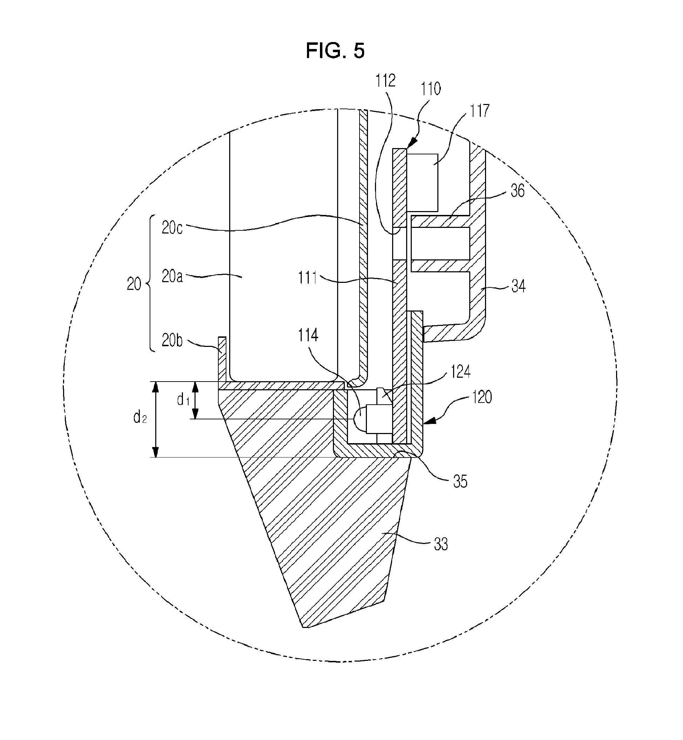

Therefore, the display device 1 includes an infrared receiver module 100 disposed at the rear or behind of the infrared receiving part 1c to receive the infrared signal. FIG. 3 is an enlarged view of the infrared receiver module 100 mounted on the display device 1 in accordance with an embodiment, FIG. 4 is an exploded perspective view of the infrared receiver module 100 in accordance with an embodiment, and FIG. 5 is a cross-sectional view of the display device having the infrared receiver module mounted thereon in accordance with an embodiment.

As shown in FIGS. 3 to 5, the infrared receiver module 100 includes an infrared sensor 114, a printed circuit board 110 on which the infrared sensor 114 is mounted, and a housing 120 in which the printed circuit board 110 is installed.

The printed circuit board 110 is plate-shaped. The printed circuit board 110 is provided with a mount surface 111 on which the infrared sensor 114 is mounted, and is separated from the rear surface of the display module 20 as shown in FIG. 2 by a designated interval such that the mount surface 111 faces the front surface of the display device 1. In addition to the infrared sensor 114, an illumination sensor 116 to adjust illumination of the display module 20 according to surrounding illumination may be mounted on the printed circuit board 110. Further, a 3D emitter 115 to generate an infrared signal so as to synchronize with 3D image glasses (not shown) enabling a user to view a 3D image displayed by the display module 20 may be mounted on the printed circuit board 110. The infrared sensor 114, the illumination sensor 116 and the 3D emitter 115 are disposed at the lower portion of the mount surface 111. The infrared sensor 114 is mounted on the mount surface 111 of the printed circuit board 110 such that a light receiving part of the infrared sensor 114 faces the front surface of the display device 1.

Connection holes 113 to connect the printed circuit board 110 to the housing 120 and a fastening hole 112 to fix the printed circuit board 110 to the rear surface part 34 of the side case 30 are formed on the printed circuit board 110. A connector 117 is provided on the other surface of the printed circuit board 110 opposite to the mount surface 111. A controller (not shown) to control operation of the display device 1 is disposed at the rear of the display module 20, and the connector 117 is connected to the controller (not shown) by a connection cable (not shown).

The housing 120 is provided with a connection groove 121, the upper portion of which is opened so that the printed circuit board 110 is connected to the connection groove 121 therethrough. The printed circuit board 110 is connected downwards to the connection groove 121, and when the printed circuit board 110 is connected to the connection groove 121, the infrared sensor 114 mounted on the printed circuit board 110 is accommodated in the connection groove 121.

The housing 120 includes a front surface part 122 disposed on the front surface of the connection groove 121 and a rear surface part opposite to the front surface part 122 and disposed on the rear surface of the connection groove 121. The rear surface part has a greater height than the front surface part 122 and supports the printed circuit board 110. The housing 120 further includes a bottom surface disposed between the front surface part 122 and the rear surface part.

The light receiving part of the infrared sensor 114 is located behind the front surface part 122. Therefore, the front surface part 122 is formed of a material which transmits the infrared signal so that the infrared signal may be received by the infrared sensor 114. For example, the front surface part 122 may be formed of a transparent or semi-transparent synthetic resin. Otherwise, the front surface part 122 may not be formed of a material which transmits the infrared signal and instead, the front surface part 122 may be provided with a receiving hole (not shown) to transmit the infrared signal. Connection protrusions 123 protruding to the connection groove 121 may be formed on the rear surface part of the housing 120. When the printed circuit board 110 is connected to the connection groove 121, the printed circuit board 110 is fixed to the housing 120 by connecting the connection protrusions 123 to the connection holes 113 formed on the printed circuit board 110. Further, support pins 124 protruding upwards may be provided on the bottom surface of the connection groove 121. When the printed circuit board 110 is connected to the connection groove 121, the support pins 124 apply pressure to the mount surface 111 of the printed circuit board 110 so as to closely adhere the printed circuit board 110 to the rear surface part.

The infrared receiver module 100 is mounted in a mount groove 35 of the side case 30. The housing 120 of the infrared receiver module 100 is accommodated within the mount groove 35. A fastening boss 36 is provided on the rear surface part 34 of the side case 30 at a position corresponding to the fastening hole 112 of the printed circuit board 110, and the infrared receiver module 100 is fixed to the side case 30 by fastening the fastening boss 36 to the fastening hole 112 using a fastening bolt 37.

The infrared sensor 114 together with the housing 120 is disposed within the mount groove 35 of the side case 30. The side surface part 33 of the side case 30 on which the mount groove 35 is formed is formed of a material which transmits the infrared signal so that the infrared signal may be received by the infrared sensor 114. For example, the side surface part 33 of the side case 30 may be formed of a transparent or semi-transparent synthetic resin. Otherwise, the side surface part 33 of the side case 30 may not be formed of a material which transmits the infrared signal and instead, the side surface part 33 of the side case 30 may be provided with a receiving hole (not shown) to transmit the infrared signal.

Since the display module 20 does not transmit infrared rays, the infrared sensor 114 is located at the bezel part 1b shown in FIG. 1, which is located along an outer edge of the display module 20. Since the printed circuit board 110 on which the infrared sensor 114 is mounted is plate-shaped, when the entirety of the printed circuit board 110 is disposed at an outer edge of the display module 20, the width of the bezel part 1b is increased corresponding to the length of the printed circuit board 110.

In the infrared receiver module 100, the printed circuit board 110 is disposed at the rear of the bottom chassis 20c of the display module 20 and only a portion of the mount surface 111 on which the infrared sensor 114 is mounted extends beyond the outer edge of the display module 20. Therefore, a distance d1 from the outer edge of a side surface of the display module 20 to an outer edge of the infrared sensor 114 in the outward direction may be minimized. Further, a distance d2 from the outer edge of the display module 20 to the bottom surface of the housing 120 of the infrared receiver module 100 is shorter than the length of the printed circuit board 110. Therefore, the width of the side surface part 33 of the side case 30, i.e., the width of the bezel part 1b, may be minimized to d2.

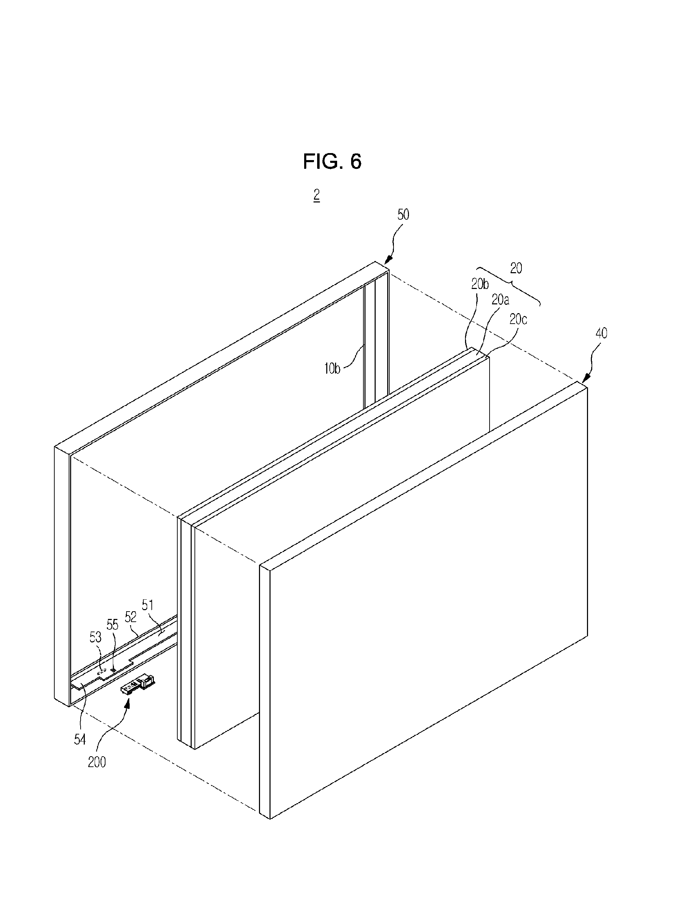

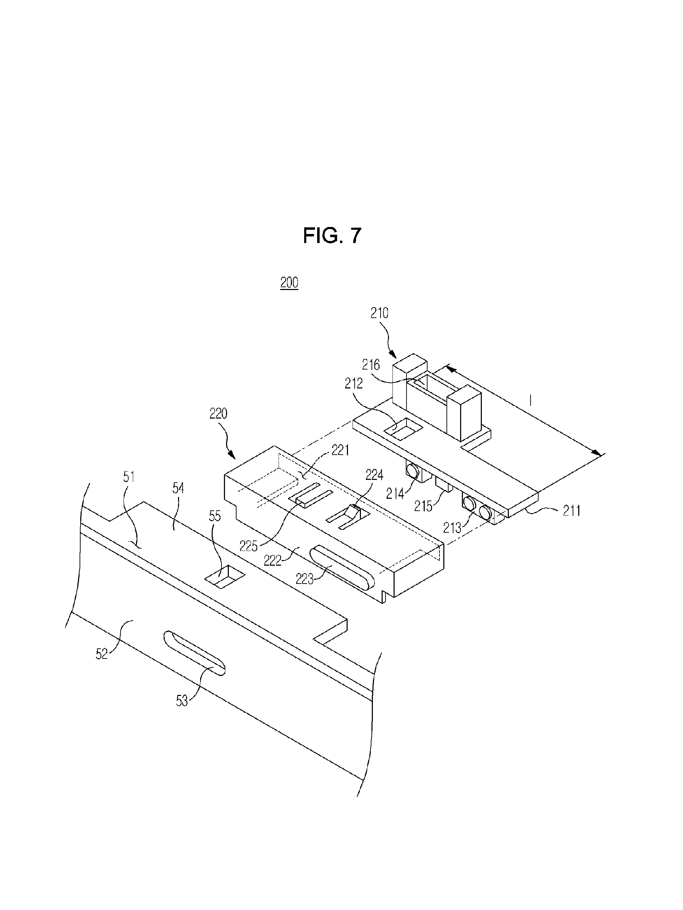

FIG. 6 is an exploded perspective view illustrating main components of a display device in accordance with another embodiment, FIG. 7 is an exploded perspective view of an infrared receiver module in accordance with the other embodiment, and

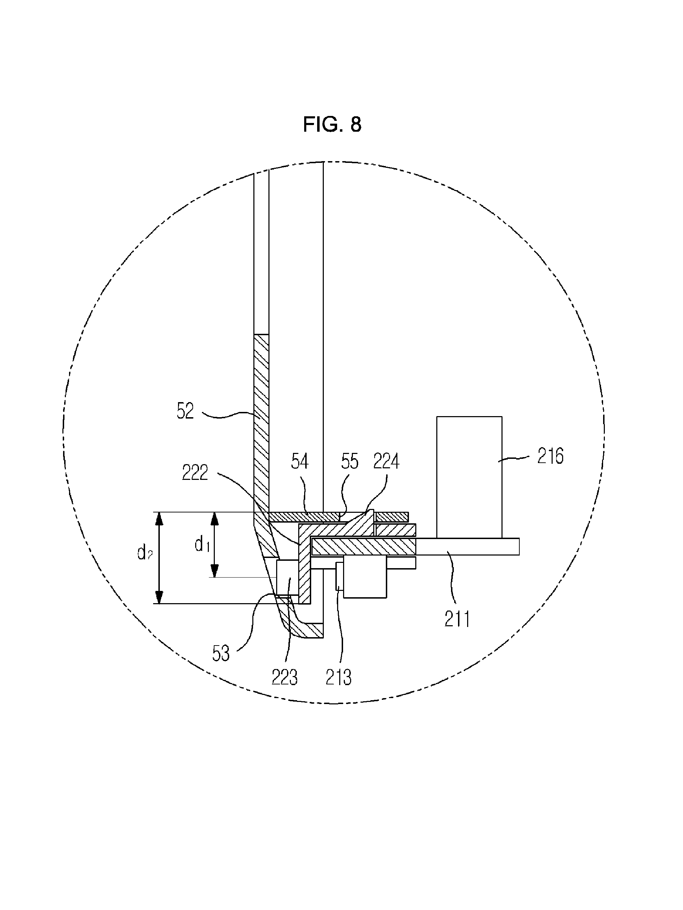

FIG. 8 is a cross-sectional view of the display device having the infrared receiver module mounted thereon in accordance with another embodiment.

As shown in FIGS. 6 to 8, a display device 2 in accordance with this embodiment includes a front case 50, a rear case 40 disposed at the rear of the front case 50 and connected to the front case 50, and a display module 20 disposed within a space formed by the front case 50 and the rear case 40. The display module 20 includes a display unit 20a to form and display an image and a top chassis 20b and a bottom chassis 20c respectively disposed on the front and rear surfaces of the display unit 20a. The display device 2 includes a display part (not shown) on which an image is displayed, and a bezel part (not shown) disposed along an outer edge of the display part (not shown). Further, an infrared receiving part (not shown) to receive an infrared signal is provided on the bezel part (not shown). The display part (not shown), the bezel part (not shown) and the infrared receiving part (not shown) of the display device 2 are provided on the front surface of the display device 2 in the same manner as the display part 1a, the bezel part 1b and the infrared receiving part 1c of the display device 1 shown in FIG. 1.

The front case 50 includes a mount groove 51 in which the infrared receiver module 200 is mounted, a front surface part 52 forming the bezel part (not shown) and a receiving hole 53 formed on the front surface part 52. The front surface part 52 is bent backwards to form a side surface part, and a support part 54 is disposed so as to be separated from the side part in the inward direction of the front case 50. The support part 54 supports the edge of one side surface of the display module 20. An infrared receiver module 200 is disposed within a space between the side surface part 10b of the front case 50 and the support part 54.

The infrared receiver module 200 includes an infrared sensor 213, a printed circuit board 210 on which the infrared sensor 213 is mounted, and a housing 220 in which the printed circuit board 210 is installed.

The printed circuit board 210 is plate-shaped. The printed circuit board 210 is provided with a mount surface 211 on which the infrared sensor 213 is mounted, and is disposed such that the mount surface 211 faces the outer edge of the display module 20. In addition to the infrared sensor 213, an illumination sensor 215 and a 3D emitter 214 may be mounted on the printed circuit board 210. The infrared sensor 213, the illumination sensor 215 and the 3D emitter 214 are disposed at the front portion of the mount surface 211. The infrared sensor 213 is mounted on the mount surface 211 of the printed circuit board 210 so that a light receiving part of the infrared sensor 213 faces the front surface of the display device 2.

A connection hole 212 to connect the printed circuit board 210 to the housing 220 is formed on the printed circuit board 210. Further, a connector 216 is provided on the other surface of the printed circuit board 210 opposite to the mount surface 211. The connector 216 is connected to a controller (not shown) by a connection cable (not shown).

The housing 220 is provided with a connection groove 221, the rear portion of which is opened so that the printed circuit board 210 is connected to the connection groove 221 therethrough. The printed circuit board 210 is connected to the connection groove 221, and when the printed circuit board 210 is connected to the connection groove 221, the infrared sensor 213 mounted on the printed circuit board 210 is accommodated in the connection groove 221.

The housing 220 includes a front surface part 222 disposed in front of the connection groove 221 and an upper surface part disposed above the connection groove 221. A receiving part 223 protrudes from the front surface part 222.

The light receiving part of the infrared sensor 213 is located at the rear of the receiving part 223 of the housing 220. Therefore, the receiving part 223 is formed of a material which transmits an infrared signal so that the infrared signal may be received by the infrared sensor 213.

A first connection pin 225 protruding to the inside of the connection groove 221 is provided on the upper surface part of the housing 220. When the printed circuit board 210 is connected to the connection groove 221, the printed circuit board 210 is fixed to the housing 220 by connecting the first connection pin 225 to the connection hole 212 of the printed circuit board 210. Further, a second connection pin 224 protruding upwards is provided on the upper surface part of the housing 220.

The infrared receiver module 200 is mounted on the front case 50 under the support part 54. A connection hole 55 is formed on the support part 54, and when the infrared receiver module 200 is mounted under the support part 54, the infrared receiver module 200 is fixed to the front case 50 by connecting the second connection pin 224 of the housing 220 to the connection hole 55 of the support part 54.

A receiving hole 53 corresponding to the receiving part 223 of the housing 220 is formed on the front surface part 52 of the front case 50. When the infrared receiver module 200 is mounted on the front surface case 50, the receiving part 223 of the housing 220 is connected to the receiving hole 53 of the front case 50.

In the infrared receiver module 200, the printed circuit board 210 is disposed at an outer edge of the display module 20 such that the mount surface 211 extends along a bottom surface of the display module 20. Therefore, a distance d1 from the outer edge of the display module 20 to the infrared sensor 213 may be minimized. Further, a distance d2 from the outer edge of the side surface of the display module 20 to the most distant portion of the infrared receiver module 200 in the outward direction is shorter than a length of the printed circuit board 210. Therefore, the width of the front surface part 52 of the front case 50, i.e., the width of the bezel part (not shown), may be minimized to d2.

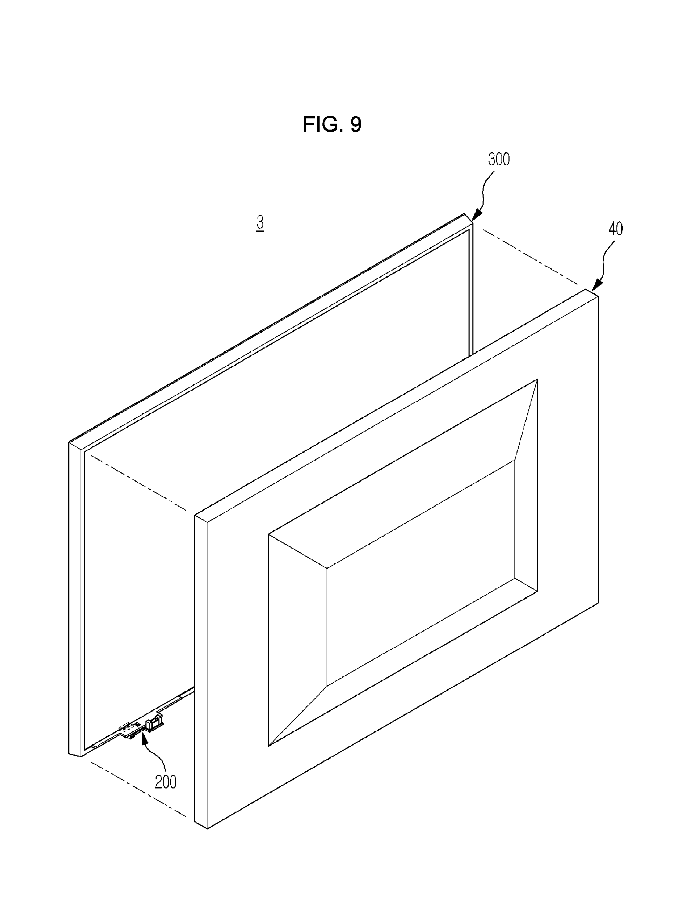

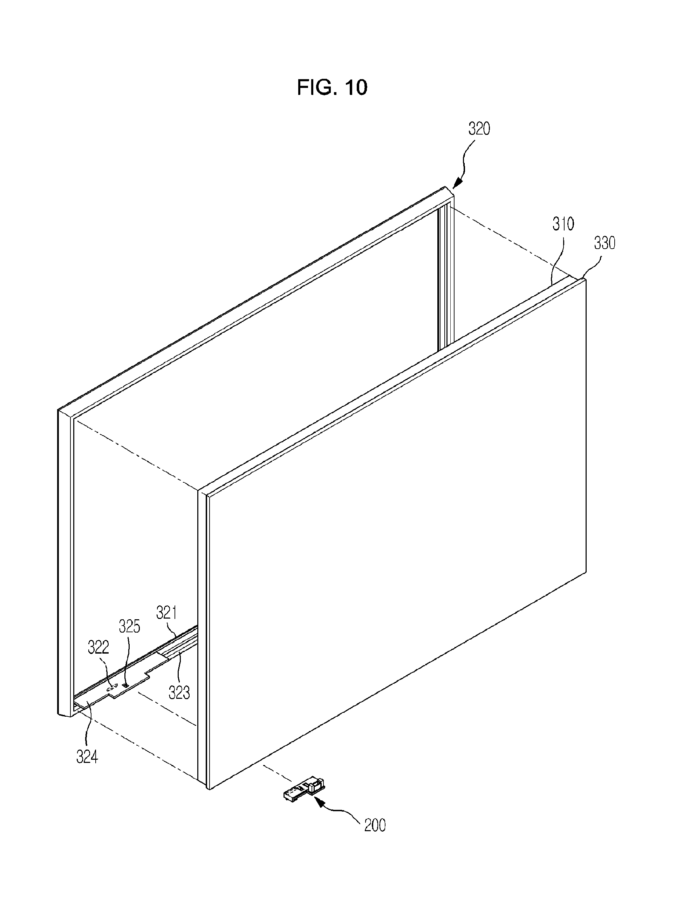

FIG. 9 is a view illustrating a display device in accordance with a further embodiment and FIG. 10 is an exploded perspective view of the display module illustrated in FIG. 9.

A display device 3 includes a display part (not shown) on which an image is displayed, and a bezel part (not shown) disposed along an outer edge of the display part (not shown). Further, an infrared receiving part (not shown) to receive an infrared signal is provided on the bezel part (not shown). The display part (not shown), the bezel part (not shown) and the infrared receiving part (not shown) of the display device 3 are provided on the front surface of the display device 3 in the same manner as the display part 1a, the bezel part 1b and the infrared receiving part 1c of the display device 1 shown in FIG. 1.

As shown in FIGS. 9 and 10, the display device 3 includes a display module 300 having a front surface and a rear surface. The front surface of the display module 300 forming the front surface of the display device 3. The display device 3 further includes a rear case 40 disposed at the rear surface of the display module 300 and connected to the display module 300. The display module 300 includes a display unit 310 to form and display an image and a top chassis 320 and a bottom chassis 330 respectively disposed on front and rear surfaces of the display unit 310. The display unit 310 and the bottom chassis 330 may be the same as the display unit 20a and the bottom chassis 20c shown in FIG. 1.

The display device 3 does not include any element corresponding to the front case 50 of the display device 2 shown in FIG. 6. Instead, the top chassis 320 of the display module 300 functions as the front case 50 shown in FIG. 6.

The top chassis 320 includes a front surface part 321 forming the bezel part (not shown), a receiving hole 322 formed on the front surface part 321, and a side surface part 323 extending from a front edge of the front surface part 321 to the bottom chassis 40.

Here, an infrared receiver module 200 has the same configuration as the infrared receiver module 200 shown in FIGS. 6 to 8.

The top chassis 320 includes a mount part 324 mounted on the side surface part 323, and the infrared receiver module 200 is mounted in a space between the side surface part 323 and the mount part 324. A connection hole 325 is formed on the mount part 324, and the infrared receiver module 200 is fixed to the top chassis 320 by connecting a second connection pin 224 of the housing 220 to the connection hole 325 of the mount part 324.

With reference to FIG. 7, if the mount surface 211 of the printed circuit board 210 is disposed so as to face the front surface of the display device 3, the width of the bezel part of the display device 3 is at least greater than the minimum length of the mount surface 211. In order to reduce the width of the bezel part of the display device 3, the infrared receiver module 200 is disposed such that the other surface of the printed circuit board 210 opposite to the mount surface 211 faces the side surface connecting the front and rear surfaces of the display unit 310. That is, the mount surface 211 of the printed circuit board 210 is disposed in parallel with the side surface of the display unit 310. In the same manner, even if the mount surface 211 of the printed circuit board 210 faces the side surface of the display unit 310, the width of the bezel part of the display device 3 may be reduced.

As is apparent from the above description, a display device in accordance with an embodiment reduces a space of a bezel part occupied by an infrared receiver module, thus reducing the width of the bezel part as much. Therefore, the external appearance of the display device may be simplified and a visual impact as if a display part has a larger size may be obtained.

Although a few embodiments have been shown and described, it would be appreciated by those skilled in the art that changes may be made in these embodiments without departing from the principles of the inventive concept, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display device comprising:
a display part on which an image is displayed;
a bezel part formed along an outer border of the display part;
an infrared receiving part provided on the bezel part; and
an infrared receiver module disposed at a rear surface of the infrared receiving part and including an infrared sensor to receive an infrared signal and a plate-shaped printed circuit board on which the infrared sensor is mounted,
wherein a distance from an edge of a side surface of the display part to a most distant portion of the infrared receiver module in a vertical direction is shorter than a length of the printed circuit board.

2. The display device according to claim 1, further comprising a display module including a front surface and a rear surface, configured such that the display part is formed on the front surface of the display module, wherein:
the printed circuit board is disposed behind the rear surface of the display module such that a mount surface of the printed circuit board on which the infrared sensor is mounted faces the rear surface of the display module and at least a part of the mount surface protrudes beyond the edge of the side surface of the display module; and
the infrared sensor is mounted on the protruding part of the mount surface.

3. The display device according to claim 2, further comprising a side case including a side surface part in which the bezel part is formed,
and a mount part including a mount groove in which the infrared receiver module is mounted.

4. The display device according to claim 3, wherein:
the side case further includes a rear surface part disposed at the rear of the display module; and
the infrared receiver module is fixed to the rear surface part.

5. The display device according to claim 3, wherein the side case is formed of a material transmitting the infrared signal.

6. The display device according to claim 3, wherein a front surface part of the mount groove is formed in a curved shape so that the infrared signal having various paths may be received by the infrared receiver module.

7. The display device according to claim 2, wherein the infrared receiver module further includes a housing in which the printed circuit board is installed.

8. The display device according to claim 7, wherein:
the housing includes a front surface part disposed in front of the infrared sensor; and
the front surface part is formed of a material transmitting the infrared signal.

9. The display device according to claim 7, wherein:
the housing further includes a rear surface part disposed at a rear of the printed circuit board;
the rear surface part includes connection protrusions protruding in a direction of the rear surface of the printed circuit board; and
the printed circuit board includes connection holes to which the connection protrusions are connected.

10. The display device according to claim 1, further comprising a display module having a front surface and a rear surface opposite to the front surface such that the display part is formed on the front surface of the display module, wherein:
the printed circuit board is disposed behind the rear surface of the display module such that a mount surface of the printed circuit board on which the infrared sensor is mounted extends along the edge of the side surface of the display module.

11. The display device according to claim 10, further comprising a front case forming the bezel part, wherein:
the front case includes a front surface part on which the infrared receiving part is provided, a side surface part formed by bending the front surface part in a direction of a rear surface of the display module, and a support part separated from the side surface part an extending along an inward direction of the front case and adjacent to one side surface of the display module; and
the infrared receiver module is disposed between the side surface part and the support part.

12. The display device according to claim 10, wherein the infrared receiver module further includes a housing in which the printed circuit board is installed.

13. The display device according to claim 12, wherein:
the front case includes a receiving hole formed on the infrared receiving part;
the housing includes a receiving part protruding from the housing in a shape corresponding to the receiving hole so as to be connected to the receiving hole; and
the receiving part is formed of a material transmitting the infrared signal.

14. The display device according to claim 1, further comprising a display module configured such that the display part is formed on the front surface of the display module, wherein:
the display module includes a top chassis on which the bezel part is formed, and a display unit disposed at the rear of the top chassis so as to form an image; and
the printed circuit board is disposed such that one of the upper and lower surfaces of the printed circuit board faces the side surface connecting the front and rear surfaces of the display unit.

15. The display device according to claim 14, wherein the infrared receiver module is mounted on the top chassis.
